# EUROPÄISCHE PATENTSCHRIFT

(11) **EP 1 683 993 B1**
(45) Veröffentlichungstag und Bekanntmachung des Hinweises auf die Patenterteilung: **11.03.2009**
(21) Anmeldenummer: 06450010.1
(22) Anmeldetag: 17.01.2006
(51) Int. Cl.: F16J 15/46, B29C 33/00

(54) **Dichteinrichtung**
Sealing device
Dispositif d'étanchéité

(30) Priorität: 19.01.2005 AT 20052005
(43) Veröffentlichungstag der Anmeldung: 26.07.2006
(73) Patentinhaber: Alba Tooling & Engineering GmbH, A-5550 Radstadt (AT)
(72) Erfinder: Pilz, Erwin Dipl. Ing. Dr., A-8972 Ramsau Ort 257/11 (AT); Moser, Andreas Ing., A-5541 Altenmarkt (AT)
(74) Vertreter: Haffner, Thomas M.

(56) Entgegenhaltungen:
- EP-A- 1 640 646
- DE-U1- 29 612 132
- US-A- 3 722 895
- US-A- 4 135 973
- US-A1- 2004 000 764

## Beschreibung

Die Erfindung bezieht sich auf eine Dichteinrichtung für die Abdichtung von einander zugewandten Flächen benachbarter Maschinenteile, wie z.B. Formwerkzeuge, mit einem aufblähbaren Dichtschlauch und einem Anschlussstückwobei das Anschlussstück von einem quer zur Achse des Dichtschlauches verschieblich geführten Stempel gebildet ist und der Dichtschlauch in eine sich im Inneren des Stempels zu einer Stirnseite erstreckende Öffnung bzw. Bohrung mündet, an welche Stirnseite eine Druckleitung für das Einbringen von Druckmedium in den aufblähbaren Dichtschlauch angeschlossen ist.

Dichtvorrichtungen für die Abdichtung von einander zugewandten Oberflächen benachbarter Maschinenteile oder Maschinenelemente sind in unterschiedlichen Ausbildungen bekannt. Im Formenbau sind als Dichtelemente häufig aufblähbare Dichtschläuche in Verwendung, welche in einer Nut des einen Maschinenteiles bzw. Maschinenelements angeordnet sind und nach ihrer Beaufschlagung mit einem Druckmedium über die Oberfläche des ersten Maschinenteiles in Richtung zur Oberfläche des benachbarten zweiten Maschinenteiles vorragen und auf diese Weise eine elastische Dichtung bewirken. Ein derartiger Dichtschlauch, welcher mit Druckmedium beaufschlagbar ist, erlaubt es, Maßtoleranzen in hohem Maße auszugleichen und erlaubt es weiter, bei verschiedenen Herstellungsprozessen, bei welchen unterschiedliche Materialien im Spritzguss verarbeitet werden, auch in einzelnen Phasen der Bearbeitung durch Ablassen des Druckmediums eine gezielte Undichtheit herzustellen, über welche beispielsweise beim Schäumen eines Werkstoffes gebildetes Gas und Treibgas abgeleitet werden kann. Bei einem derartigen Prozess kann dann, wenn nach dem Verdrängen von Luft oder Treibgas Schaum am Dichtkragen zwischen dem Spritzgussteil und einem weiteren Formteil austritt, die Dichtung rasch durch Aufblasen wieder hergestellt werden und der Schäumvorgang ohne weiteren Materialverlust zu Ende geführt werden.

Eine Dichtvorrichtung ist beispielsweise der EP 1 045 179 A2 zu entnehmen, bei welcher die Enden des aufblähbaren Dichtschlauches mit Einsatzstücken abgeschlossen sind, von welchen wenigstens eines eine Durchführung für das Einbringen von Druckmedium aufweist. Diese Einsatzstücke sind bei dieser bekannten Ausbildung als Hülsen ausgebildet, die jeweils die stirnseitigen Enden des Dichtschlauches unter elastischer Vorspannung dichtend umschließen, wobei diese Hülsen in jeweilige Ausnehmungen des Maschinenelementes angeordnet sind, die sich im Wesentlichen quer zur Längsrichtung der Nut erstrecken, welche für die Aufnahme des Dichtschlauches vorgesehen ist. Eine Verbesserung dieser Ausbildung wurde in der EP 1 361 380 A2 vorgeschlagen, in welcher klar erkannt wurde, dass für die Herstellung komplexer Schaumkörper, bei denen auch in den Endbereichen der Dichtschläuche eine sehr genaue Abdichtung erreicht werden soll, die in der EP 1 045 179 A2 beschriebene Lösung nicht hinreichende Sicherheit bietet. Bei dieser Weiterbildung gemäß der EP 1 361 380 A2 wird eine spezielle Form der Anschlussstücke bzw. Endstücke des aufblasbaren Schlauches vorgeschlagen, welche Stützkörper umfassen, über welche jeweils eine Einstülpung des Schlauches aufgeschoben ist. Mit dieser Ausbildung soll sichergestellt werden, dass der Schlauch bis in den Bereich der Einstülpung mit Druck beaufschlagt werden kann, sodass auf diese Weise eine Druckbeaufschlagung bis nahe an den Rand der Form gelingt, wobei die Druckmittelzufuhr über ein entsprechend starr angeordnetes, gekrümmtes Rohr durch den Stützkörper hindurch erfolgt. Insgesamt wird mit einer derartigen Ausbildung zwar eine wesentliche Verbesserung der Dichtwirkung in den Randbereichen sichergestellt. Der konstruktive Aufbau und der Einbau derartiger Dichteinrichtungen ist allerdings mit einem höheren Aufwand, und insbesondere mit höherem Montageaufwand, verbunden.

Die U.S. 3,722,895 zeigt eine Dichtvorrichtung der eingangs genannten Art, bei welcher ein Dichtschlauch in eine sich im Inneren des Stempels zu einer Stirnseite erstreckende Öffnung bzw. Bohrung mündet, an welche Stirnseite eine Druckleitung für Druckmedium angeschlossen ist.

Die EP.A. 164064 zeigt eine Dichtvorrichtung der eingangs genannten Art nach Artikel 54(3) EPÜ.

Die Erfindung zielt nun darauf ab, eine besonders einfache Einrichtung der eingangs genannten Art zu schaffen, mit welcher konventionell aufblähbare Dichtschläuche verwendet werden können, ohne dass hiefür die Enden der Dichtschläuche in spezieller Weise bearbeitet werden müssen. Gleichzeitig zielt die Erfindung darauf ab, eine Dichtwirkung bis an den Rand der Form auch bei komplexen Formgebungen, und insbesondere bei höheren Toleranzen der miteinander zusammenwirkenden Bauteile bzw. einer zwischengeschalteten Dekorfläche bzw. Haut, zu gewährleisten und einen besonders einfachen Ein- und Ausbau der Elemente der Dichtung zu gewährleisten.

Zur Lösung dieser Aufgabe besteht die erfindungsgemäße Ausbildung im Wesentlichen darin, dass der Dichtschlauch in radialer Richtung zur Achse des Stempels an den Stempel angeschlossen ist. Dadurch, dass ein axial verschieblicher Stempel vorgesehen ist, in welchen in radialer Richtung der Achse des Stempels der aufblähbare Dichtschlauch im Wesentlichen nur eingesteckt werden muss, wird ein besonders einfacher Zusammenbau gewährleistet und gleichzeitig ein Element geschaffen, welches auf Grund seiner axialen Verschiebbarkeit elastisch bzw. unter definierten Kräften gegen den jeweils anderen Maschinenteil oder eine zwischen den Maschinenteilen anzuordnende Zwischenschicht bzw. Haut angepresst werden kann. Der Stempel kann zu diesem Zweck federnd in Richtung zum benachbarten Maschinenteil vorgespannt sein oder aber in besonders einfacher Weise mit dem Druckmedium selbst in die gewünschte Dichtposition verschoben werden. Dadurch, dass die Druckleitung für das Druckmedium an der dem benachbarten Maschinenteil abgewandten Stirnseite des Stempels mündet, kann der über diesen Anschluss aufgebaute Druck gleichzeitig zum Aufblähen des Dichtschlauches und zur axialen Verschiebung des Stempels ausgenützt werden, wodurch eine sichere Dichtwirkung bis an den Rand der jeweils abzudichtenden Formteile sowie ein rasches Entleeren und drucklos machen des Dichtschlauches in verschiedenen Phasen des Herstellungsprozesses gewährleistet ist. Der axial verschiebliche Stempel kann hiebei an beiden freien Enden des Dichtschlauches angeordnet sein, wodurch ein besonders rascher Druckaufbau und Druckabbau möglich ist und gleichzeitig besonders geringe Anforderungen an die Ausgestaltung des jeweils verwendeten Dichtschlauches gestellt werden.

In besonders einfacher Weise kann die Ausbildung hiebei so getroffen sein, dass der Stempel dichtend in axialer Richtung verschieblich in einem Maschinenteil geführt ist, sodass tatsächlich der Mediendruck, welcher für das Aufblähen des Dichtschlauches aufgebaut wird, ohne Leckage zur Verschiebung des Stempels in axialer Richtung herangezogen werden kann. Eine derartige dichtende Führung kann in besonders einfacher Weise dadurch erzielt werden, dass der Stempel in einer Büchse oder einem Führungsstück geführt ist, deren axiale Höhe geringer als die axiale Länge des Stempels gewählt ist. Bei dieser Ausbildung genügt es die entsprechende Buchse dicht im Maschinenteil zu verankern, sodass ein rascher Wechsel des Dichtschlauches durch Herausziehen der Stempel und eine besonders einfache und rasche Montage ermöglich wird.

Um bei entsprechenden Toleranzen der Dicke einer Einlegehaut, und insbesondere bei Toleranzen der Dicke einer Dekorhaut, die Dichtung bis zu Rändern der jeweiligen Form besonders sicher erzielen zu können, kann mit Vorteil die Ausbildung so getroffen werden, dass die Stempelachse mit einer Normalen auf die Ebene der abzudichtenden Oberfläche einen spitzen Winkel von 0° bis 40° einschließt. Die axiale Verschiebung des Stempels bewirkt auf diese Weise eine Spannung einer Einlegehaut auf Grund der in der Ebene der Einlegehaut wirksamen Kraftkomponente beim Anstellen eines derartig orientierten Stempels.
Der Ausbau des Stempels und die entsprechend geeignete Drehorientierung des Stempels lassen sich dadurch erleichtern, dass die geschlossene Außenstirnfläche des Stempels ein entsprechendes Profil, beispielsweise einen Schlitz, aufweist, sodass mittels eines einfachen Werkzeuges die korrekte Drehlage des Stempels für den Einbau gewählt werden kann. Eine entsprechende Profilierung oder ballige Ausbildung ermöglicht einen besseren Ausgleich von hohen Toleranzen bei der Verwendung von Deckschichten oder dickeren Hautmaterialien für Spritzgussteile aus einer Mehrzahl von Komponenten, und insbesondere für Strukturschaumteile.

Eine verbesserte Abdichtung im Bereich des Stempels sowie eine Überbrückung höherer Spaltbreiten lassen sich gemäß einer bevorzugten Ausbildung dadurch erreichen, dass die dem Anschluss des Dichtschlauches benachbarte Stirnfläche des Stempels aus einem elastischen Material, vorzugsweise aus einem Elastomer, besteht, wobei mit Vorteil die Shore A-Härte des elastischen Materials 40-60 beträgt.

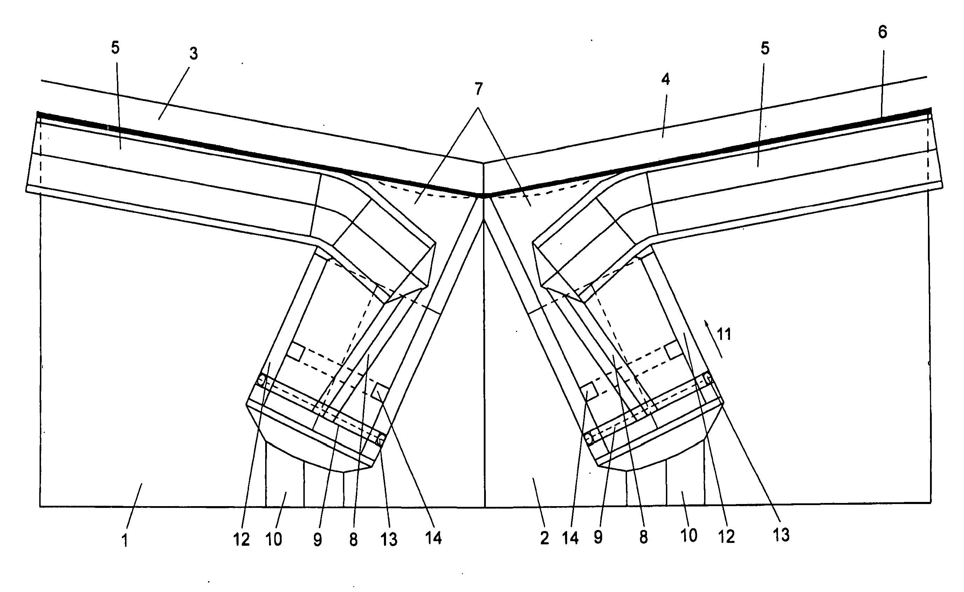

Die Erfindung wird nachfolgend anhand eines in der Zeichnung schematisch dargestellten Ausführungsbeispieles näher erläutert. In der Zeichnung ist ein Formwerkzeug dargestellt, welches aus den Teilen 1 bzw. 2 besteht, welche gegen entsprechende Gegenformteile bzw. Träger 3 und 4 angestellt werden können. Der zwischen diesen Formteilen 1 und 3 bzw. 2 und 4 bestehende Spalt kann durch aufblähbare Dichtschläuche 5 nach Einpressen von Druckmedium gedichtet werden, wobei in der Zeichnung zwischen den jeweiligen Formteilen 1 und 3 bzw. 2 und 4 noch eine Einlegehaut 6 ersichtlich ist, welche als Dekorhaut in die Formenkavität eingelegt wird. Bei der Verwendung derartiger Dekorhäute und gleichzeitigem Einsatz von Weichschaumkernen muss sichergestellt werden, dass die Möglichkeit einer Entlüftung für das Austreten von verdrängtem Gasvolumen und Treibgas aus der Schaumreaktion geschaffen wird und es muss daher der Druck im aufblähbaren Dichtschlauch entsprechend rasch auf- und abgebaut werden können. Der Druckschlauch ist mit seinen freien Enden in eine im Wesentlichen radiale Bohrung eines Stempels 7 eingeschoben, wobei diese freien Enden in eine im Inneren des Stempels 7 in im Wesentlichen axialer Richtung verlaufende Bohrung 8 münden, welche zur unteren Stirnseite 9 des Stempels 7 geführt ist. Mit 10 sind Druckluftanschlüsse bezeichnet, über welche Druckluft durch die Bohrungen 8 in das Innere des Dichtschlauches 5 gepumpt werden kann bzw. bei entsprechend geöffneten Ventilen abgeleitet werden kann. Bei einer Beaufschlagung der unteren Stirnfläche 9 des Stempels 7 mit Druckmedien gelangt aber nun nicht nur Druckfluid über die Bohrung 8 in das Innere des Dichtschlauches 5, sondern es erfolgt gleichzeitig eine Beaufschlagung des Stempels 7 in Richtung des Pfeiles 11. Zu diesem Zweck ist der Stempel 7 axial verschieblich im Bauteil 1 bzw. 2 gelagert, wobei zur Verbesserung der Dichtwirkung hier jeweils Büchsen 12 vorgesehen sind, welche starr mit den Bauteilen 1 und 2 verbunden sind und Dichtringe, insbesondere O-Ringe, 13 aufweisen. Diese Büchsen 12 können als Verschleißteile in einfacher Weise gewechselt werden, wobei im Inneren dieser Büchsen 12 die Stempel 7 unter Verwendung von Dichtringen 14 dichtend geführt sind, sodass Leckagen vermieden werden. Auf diese Weise können beispielsweise Druckluftstöße mit 6 bar zur Beaufschlagung der Dichtschläuche eingesetzt werden und gleichzeitig sichergestellt werden, dass auch bei kompliziert geformten Formteilen, beispielsweise im Bereich des Übergangs zwischen den Maschinenteilen 1 und 2, am Rand der jeweiligen Dichtschläuche ein sicheres Anpressen und Abdichten der Dekorhaut relativ zum Formteil gewährleistet ist.

## Patentansprüche

1. Dichteinrichtung für die Abdichtung von einander zugewandten Flächen benachbarter Maschinenteile (1,3;2,4), wie z.B. Formwerkzeuge, mit einem aufblähbaren Dichtschlauch (5) und einem Anschlussstück für das Einbringen von Druckmedium in den aufblähbaren Dichtschlauch (5), wobei das Anschlussstück von einem quer zur Achse des Dichtschlauches (5) verschieblich geführten Stempel (7) gebildet ist und der Dichtschlauch in eine sich im Inneren des Stempels (7) zu einer Stirnseite (9) erstreckende Öffnung bzw. Bohrung (8) mündet, an welche Stirnseite (9) eine Druckleitung für Druckmedium angeschlossen ist, **dadurch gekennzeichnet, dass** der Dichtschlauch (5) in radialer Richtung zur Achse des Stempels (7) an den Stempel (7) angeschlossen ist.

2. Dichteinrichtung nach Anspruch 1, **dadurch gekennzeichnet, dass** der Stempel (7) dichtend in axialer Richtung verschieblich in einem Maschinenteil (1,2) geführt ist.

3. Dichteinrichtung nach Anspruch 1 oder 2, **dadurch gekennzeichnet, dass** der Stempel (7) in einer Büchse (12) oder einem Führungsstück geführt ist, deren axiale Höhe geringer als die axiale Länge des Stempels (7) gewählt ist.

4. Dichteinrichtung nach einem der Ansprüche 1 bis 3, **dadurch gekennzeichnet, dass** die Stempelachse mit einer Normalen auf die Ebene der abzudichtenden Oberfläche einen spitzen Winkel von 5° bis 40° einschließt.

5. Dichteinrichtung nach einem der Ansprüche 1 bis 4, **dadurch gekennzeichnet, dass** die dem Anschluss des Dichtschlauches benachbarte Stirnfläche des Stempels (7) profiliert und/oder ballig ausgebildet ist.

6. Dichteinrichtung nach einem der Ansprüche 1 bis 5, **dadurch gekennzeichnet, dass** die dem Anschluss des Dichtschlauches (5) benachbarte Stirnfläche des Stempels (7) aus einem elastischen Material, vorzugsweise aus einem Elastomer, besteht.

7. Dichteinrichtung nach Anspruch 6, **dadurch gekennzeichnet, dass** die Shore A-Härte des elastischen Materials 40-60 beträgt.

## Claims

1. Sealing device for sealing of facing surfaces of neighbouring machine parts (1,3;2,4) such as for example forming tools, having an inflatable sealing tube (5) and a connector for providing pressurised fluid to the inflatable sealing tube (5), wherein the connector is formed of a plunger (7) displaceably guided transversely to the axis of the sealing tube (5) and the sealing tube opens into an opening or bore (8) extending inside the plunger (7) to a front side (9), to which front side (9) a pressure line for pressurised fluid is connected, **characterised in that** the sealing tube (5) is connected to the plunger radially to the axis of the plunger (7).

2. Sealing device according to claim 1, **characterised in that** the plunger (7) is sealingly and axially displaceably guided inside a machine part (1,2).

3. Sealing device according to claim 1 or 2, **characterised in that** the plunger (7) is guided in a bushing (12) or a guide piece, whose axial height is chosen to be minor to the axial length of the plunger (7).

4. Sealing device according to anyone of claims 1, 2 or 3, **characterised in that** the axis of the plunger forms an acute angle of 5° to 40° with the perpendicular to the plane of the surface to be sealed.

5. Sealing device according to anyone of claims 1 to 4, **characterised in that** the front side of the plunger (7) neighbouring the connector of the sealing tube is formed in a profiled and/or spherical manner.

6. Sealing device according to anyone of claims 1 to 5, **characterised in that** the front side of the plunger (7) neighbouring the connector of the sealing tube (5) is formed of an elastic material, preferably an elastomer.

7. sealing device according to claim 6, **characterised in that** the Shore A-hardness of the elastic material is 40 - 60.

## Revendications

1. Dispositif d'étanchéité pour l'étanchéité de deux surfaces tournées l'une vers l'autre de pièces de machine voisines (1, 3 ; 2, 4), par exemple d'outils de moulage, avec un tube d'étanchéité gonflable (5) et un raccord permettant d'amener un fluide sous pression dans le tube d'étanchéité gonflable (5), le raccord étant formé d'un poinçon (7) mobilement guidé perpendiculairement à l'axe du tube d'étanchéité (5) et le tube d'étanchéité (5) débouche dans une ouverture ou un alésage (8) s'étendant à l'intérieur du poinçon (7) vers une face d'extrémité (9), laquelle face d'extrémité (9) porte raccordée une conduite forcée pour un fluide sous pression, **caractérisé en ce que** le tube d'étanchéité est raccordé au poinçon (7) dans le sens radial par rapport à l'axe du poinçon (7).

2. Dispositif d'étanchéité selon la revendication 1, **caractérisé en ce que** le poinçon (7) est guidé de façon étanche en translation dans le sens axial dans une pièce de machine (1, 2).

3. Dispositif d'étanchéité selon la revendication 1 ou 2, **caractérisé en ce que** le poinçon (7) est guidé dans une douille (12) ou un élément de guidage, dont la hauteur axiale est choisie inférieure à la longueur axiale du poinçon (7).

4. Dispositif d'étanchéité selon l'une des revendications 1 à 3, **caractérisé en ce que** l'axe du poinçon forme avec une perpendiculaire au plan de la surface à rendre étanche un angle aigu de 5° à 40°.

5. Dispositif d'étanchéité selon l'une des revendications 1 à 4, **caractérisé en ce que** la face du poinçon (7) voisine du raccord du tube d'étanchéité est profilée et/ou de forme sphérique.

6. Dispositif d'étanchéité selon l'une des revendications 1 à 5, **caractérisé en ce que** la face du poinçon (7) voisine du raccord du tube d'étanchéité (5) se compose d'un matériau élastique, de préférence d'un élastomère.

7. Dispositif d'étanchéité selon la revendication 6, **caractérisé en ce que** la dureté Shore A du matériau élastique est de 40 à 60.
